# EUROPEAN PATENT APPLICATION

(11) **EP 4 360 431 A1**
(43) Date of publication of application: **01.05.2024**
(21) Application number: 23203069.2
(22) Date of filing: 11.10.2023
(51) Int. Cl.: A01D 41/12, A01D 43/07

(54) **PERFORMING A FILL-TO-WEIGHT UNLOADING OPERATION**

(30) Priority: 27.10.2022 US 202263381178 P; 27.10.2022 US 202263381187 P; 21.07.2023 US 202363512368 P; 25.07.2023 US 202318358401
(71) Applicant: Deere & Company, Moline, IL 61265 (US)
(72) Inventor: O'CONNOR, KELLEN E., 68163 Mannheim (DE); FAUST, JEREMY J, 68163 Mannheim (DE); RITCHIE, ZACHARY, 68163 Mannheim (DE); WHITE, RYAN R, 68163 Mannheim (DE)
(74) Representative: Holst, Sönke

(57) **Abstract**

A leading vehicle loads material into a receiving vehicle during an unloading operation and receives a weight value from the receiving vehicle indicative of a weight of material that has been loaded into the receiving vehicle. The leading vehicle controls the unloading operation based on the weight value.

## Description

The present description generally relates to machines that load material into receiving vehicles, such as harvesting machines that fill carts, semitrailers, or other agricultural or other receiving vehicles. More specifically, but not by limitation, the present description relates to automated control of a fill-to-weight unloading operation.

### BACKGROUND

There are a wide variety of different types of vehicles that load material into other vehicles. Some such vehicles include agricultural vehicles such as forage harvesters or other harvesters (such as combine harvesters, sugarcane harvesters, silage harvesters, etc.), that harvest grain or other crop. Such harvesters often unload material into carts, which may be pulled by tractors, or semitrailers, as the harvesters are moving. Other vehicles that unload material into receiving vehicles include construction vehicles, such as cold planers that unload into a dump truck, and other vehicles.

Taking an agricultural harvester as an example, while harvesting in a field using a forage harvester or combine harvester, an operator attempts to control the harvester to maintain harvesting efficiency, during many different types of conditions. The soil conditions, crop conditions, etc. can all change. This may result in the operator changing control settings. This means the operator needs to devote a relatively large amount of attention to controlling the forage harvester or combine harvester.

At the same time, a semitruck or tractor-pulled cart (a receiving vehicle), is often in position relative to the harvester (e.g., alongside the harvester or behind the harvester) so that the harvester can fill the semitrailer or cart, while moving through the field. In some current systems, this requires the operator of the harvester to control the position of the unloading spout and flap so that the truck or cart is filled evenly, but not over filled. Even a momentary misalignment between the spout and the truck or cart may result in hundreds of pounds of harvested material being dumped on the ground, rather than in the truck or cart.

### SUMMARY

A leading vehicle loads material into a receiving vehicle during an unloading operation and receives a weight value from the receiving vehicle indicative of a weight of material that has been loaded into the receiving vehicle. The leading vehicle controls the unloading operation based on the weight value.

### BRIEF DESCRIPTION OF THE DRAWINGS

FIG. 1 is a pictorial illustration of one example of a forage harvester filling a tractor-pulled receiving vehicle, with the receiving vehicle following the forage harvester.
FIG. 2 is a pictorial illustration of one example of a forage harvester filling a receiving vehicle that is alongside the forage harvester.
FIG. 3 shows a combine harvester filling a receiving vehicle.
FIGS. 4A and 4B (collectively referred to as FIG. 4) show a block diagram of one example of an agricultural system.
FIG. 5 is a side profile of a receiving vehicle.
FIG. 6 is a flow diagram showing one example of controlling an unloading operation.
FIG. 7 is a flow diagram showing one example of controlling an unloading operation.
FIG. 8 is a flow diagram showing one example of controlling an unloading operation.
FIG. 9 is a block diagram showing one example of a harvesting machine deployed in a remote server architecture.
FIGS. 10-12 show examples of mobile devices that can be used in the machines and systems described in other figures.
FIG. 13 is a block diagram showing one example of a computing environment that can be used in the machines and systems described with respect to previous figures.

### DETAILED DESCRIPTION

The present discussion proceeds with respect to an agricultural harvester, but it will be appreciated that the present discussion is also applicable to construction machines or other material loading vehicles as well. As discussed above, it can be very difficult for an operator to maintain high efficiency in controlling a harvester, and also to optimally monitor the position of the receiving vehicle during an unloading (or filling) operation. This difficulty can even be exacerbated when the receiving vehicle is located behind the harvester (such as a forage harvester), so that the forage harvester is executing a rear unloading operation, but the difficulty also exists in side-by-side unloading scenarios.

In order to address these issues, some automatic cart filling control systems have been developed to automate portions of the filling process. One such automatic fill control system uses a stereo camera on the spout of the harvester to capture an image of the receiving vehicle. An image processing system detects material height within the receiving vehicle, in order to automatically aim the spout toward empty spots and control the flap position (and thus material trajectory) to achieve a more even fill, while reducing spillage. Such systems can fill the receiving vehicle according to a fill strategy (such as front-to-back, back-to-front, etc.) that is set by the operator or that is set in other ways.

In addition, some current harvesters are provided with a machine synchronization control system. The harvester may, for instance, be a combine harvester so that the spout is not movable relative to the frame during normal unloading operations. Instead, the relative position of the receiving vehicle and the combine harvester is changed in order to fill the receiving vehicle as desired. Thus, in a front-to-back fill strategy, for instance, the relative position of the receiving vehicle, relative to the combine harvester, is changed so that the spout is first filling the receiving vehicle at the front end, and then gradually fills the receiving vehicle moving rearward. In such an example, the combine harvester and receiving vehicle may have machine synchronization systems which communicate with one another. When the relative position of the two vehicles is to change, the machine synchronization system on the combine harvester can send a message to the machine synchronization system on the towing vehicle to nudge the towing vehicle slightly forward or rearward relative to the combine harvester, as desired. By way of example, the machine synchronization system on the combine harvester may receive a signal from the fill control system on the combine harvester indicating that the position in the receiving vehicle that is currently being filled is approaching its desired fill level. In that case, the machine synchronization system on the combine harvester can send a "nudge" signal to the machine synchronization system on the towing vehicle. The "nudge", once received by the machine synchronization system on the towing vehicle, causes the towing vehicle to automatically momentarily speed up or slow down, thus nudging the position of the receiving vehicle forward or rearward, respectively, relative to the combine harvester. By automatically it is meant, for example, that the operation is performed without further human involvement except, perhaps, to initiate or authorize the operation.

For purposes of the present discussion, the term leading vehicle will be the vehicle that is unloading material into the receiving vehicle. The term following vehicle will refer to the propulsion vehicle, or towing vehicle (such as a tractor), that is providing propulsion to the receiving vehicle (such as a cart).

Some receiving vehicles have weight restrictions or limitations that define the upper limit of the weight that the receiving vehicle can safely carry. Such restrictions and limitations may also be imposed by regulations that govern weight limits on roads. Exceeding such weight restrictions and limitations may result in damage or excess wear on the receiving vehicle and/or can result in fines being imposed or other deleterious consequences. The weight restrictions and/or limitations may be exceeded during a fill operation, for example, when filling to a desired material height, and when the density of the material is higher than expected. The weight restrictions and/or limitations can be exceeded, inadvertently, in other ways as well.

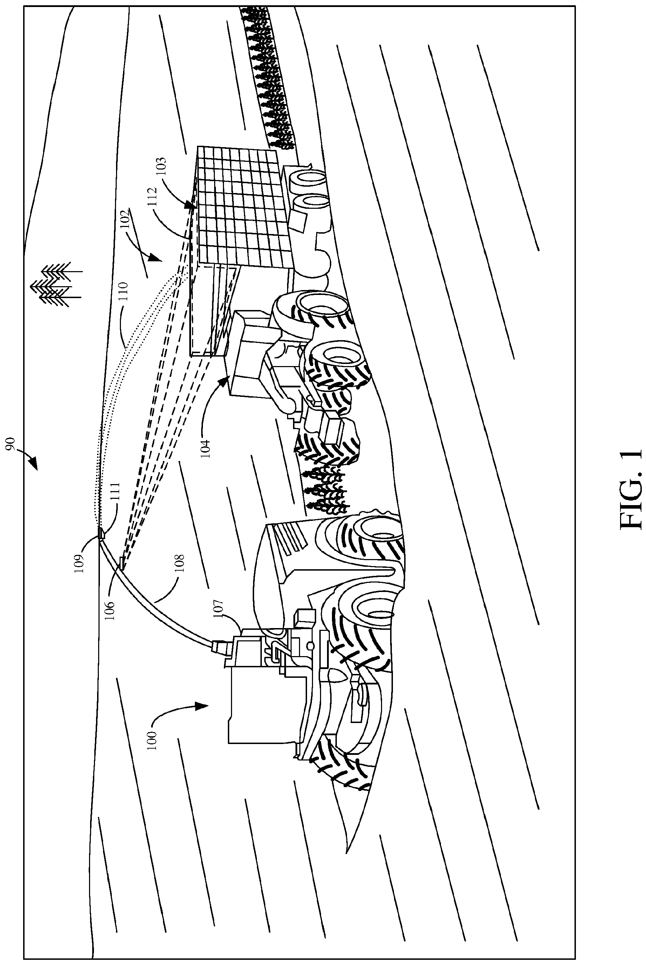

The present description thus proceeds, in one example, with respect to a system that receives a weight value indicative of the weight of material that has been loaded into the receiving vehicle and controls the fill operation (or unloading operation) based on the weight of the material. In one example, the system also receives, a fill height sensor signal indicative of the height of material loaded into the receiving vehicle. The system can then control the fill operation based on the weight value and the fill height. FIG. 1 is a pictorial illustration showing one example of a self-propelled forage harvester 100 (a material loading vehicle also referred to as a leading vehicle) filling a tractor-pulled grain cart (or receiving vehicle) 102. Cart 102 thus defines an interior that forms a receiving vessel 103 for receiving harvested material through a receiving area 112. In the example shown in FIG. 1, a tractor 104 (a towing vehicle also referred to as a following vehicle), that is pulling grain cart 102, is positioned directly behind forage harvester 100 Also, in the example illustrated in FIG. 1, forage harvester 100 has a detector such as camera 106 mounted on the spout 108 through which the harvested material 110 is traveling. The spout 108 can be pivotally or rotatably mounted to a frame 107 of harvester 100. In the example shown in FIG. 1, the detector 106 is a stereo-camera or a mono-camera that captures an image (e.g., a still image or video) of the receiving area 112 of cart 102. Also, in the example shown in FIG. 1, the receiving area 112 is defined by an upper edge of the walls of cart 102.

When harvester 100 has an automatic fill control system that includes image processing, as discussed above, the automatic fill control system attempts to identify the location of the receiving area 112 by identifying the edges or walls of the receiving area and can then gauge the height of harvested material in cart 102, and the location of that material in the receiving vehicle. The system thus automatically controls the position of spout 108 and flap 109 to direct the trajectory of material 110 into the receiving area 112 of cart 102 to obtain an even fill throughout the entire length and width of cart 102, while not overfilling cart 102. By automatically, it is meant, for example, that the operation is performed without further human involvement except, perhaps, to initiate or authorize the operation.

For example, when executing a back-to-front automatic fill strategy the automatic fill control system may attempt to move the spout and flap or a machine synchronization system can position the vehicles relative to one another so the material begins landing at a first landing point in the back of vessel 103 of receiving vehicle 102. Then, once a desired fill level is reached in the back of vessel 103, the automatic fill control system moves the spout and flap or the machine synchronization system nudges the receiving vehicle to change the position of the vehicles relative to one another so the material begins landing just forward of the first landing point in vessel 103.

Also, cart 102 has a scale that generates a weight signal indicative of a weight of material loaded into cart 102. The weight signal can be communicated to the automated fill control system to control the fill operation based on the weight signal and/or based on the fill level. This enables receiving vehicle 102 to be filled according to a desired fill pattern without exceeding weight restrictions or limitations on receiving vehicle 102.

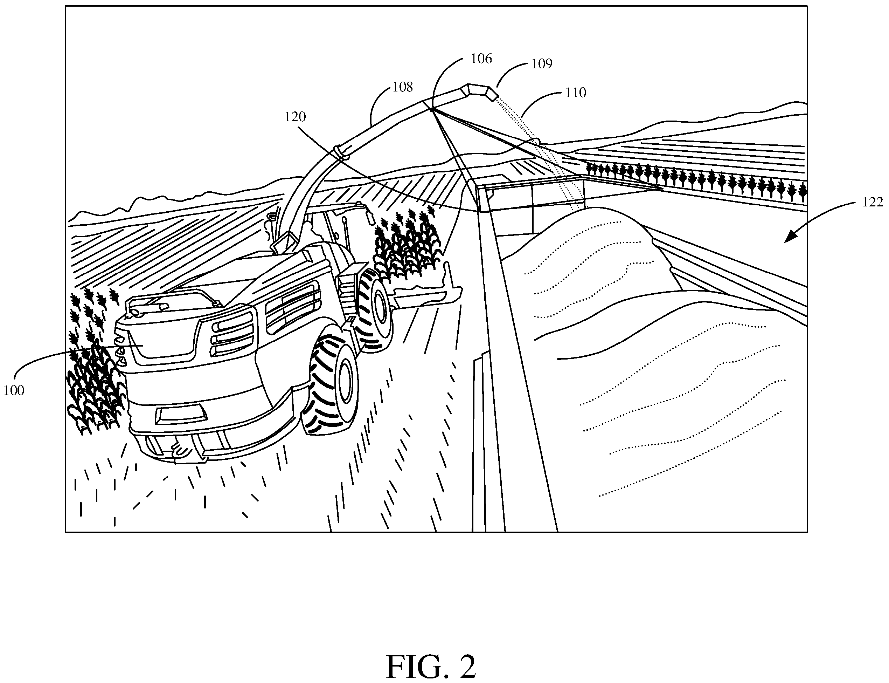

FIG. 2 is a pictorial illustration showing another example of a self-propelled forage harvester 100, this time loading a semi-trailer (or receiving vessel on a receiving vehicle) 122 in a configuration in which a semi-tractor (also referred to as a following vehicle) is pulling semi-trailer 122 alongside forage harvester 100. Therefore, the spout 108 and flap 109 are positioned to unload the harvested material 110 to fill trailer 122 according to a pre-defined side-by-side fill strategy. Again, FIG. 2 shows that camera 106 can capture an image (which can include a still image or video) of semi-trailer 122. In the example illustrated in FIG. 2, the field of view of camera 106 is directed toward the receiving area 120 of trailer 122 so that image processing can be performed to identify a landing point for the harvested material in trailer 122. A machine synchronization system can nudge the semi-trailer forward or rearward relative to harvester 100 to accomplish a fill strategy. Trailer 122 can also have a scale that sends a weight signal to the automated control system to control the unloading operation based on the weight signal.

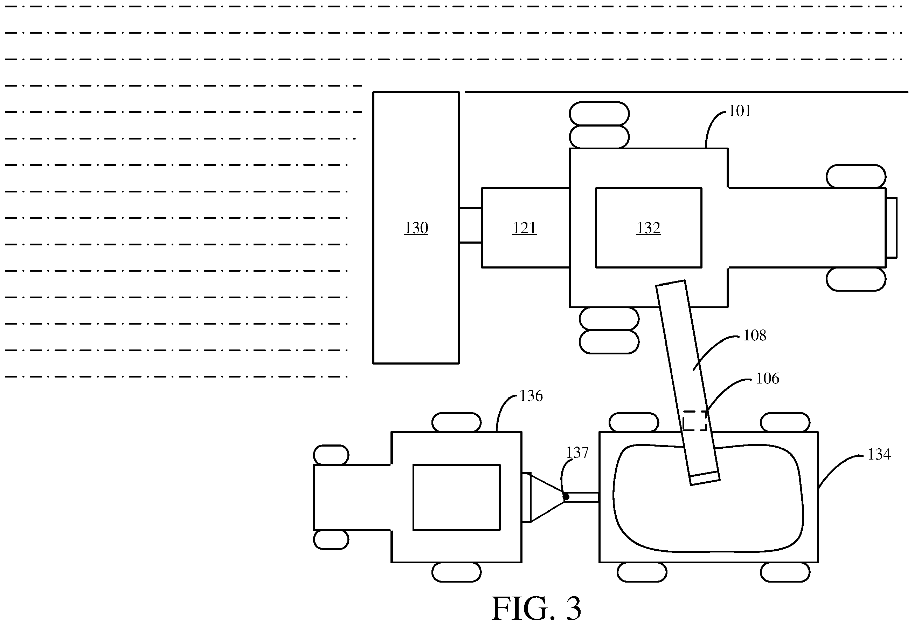

FIG. 3 shows an example in which leading vehicle 101 is a combine harvester, with an operators compartment 121 and with a header 130 that engages crop. The crop is processed and placed in a clean grain tank 132, where it is unloaded (such as using an auger) through spout 108 into a receiving vehicle 134 (e.g., a grain cart) that is pulled by a following vehicle 136 (e.g., a tractor). FIG. 3 shows that receiving vehicle 134 is coupled to following vehicle 136 at a hitch point, or pivot point, 137. When harvester 101 is a combine harvester, it may be that the spout 108 is not moved relative to the frame of harvester 101 during normal unloading operations. Instead, the relative position of the receiving vehicle 134 and the combine harvester 101 is changed in order to fill the receiving vessel as desired. Thus, if a front-to-back fill strategy is to be employed, then the relative position of the receiving vessel in receiving vehicle 134, relative to the combine harvester 101, is changed so that the spout 108 is first filling the receiving vehicle 134 at the front end, and then gradually fills the receiving vessel moving rearward.

As with the examples shown in FIGS. 1 and 2, receiving vehicle 134 can have a scale that generates a weight signal alone or based on the weight signal in conjunction with other information, such as the height of material in the receiving material. The automated system can control the unloading operation based on the weight signal. The weight signal can be sent to the following vehicle 136 and then to the automated system (which may be on leading vehicle 101) or directly to the automated system. The weight signal can also be sent to a remote server and then to the loading vehicle 101. The communication channels can be wifi, cellular, and/or other communication channels.

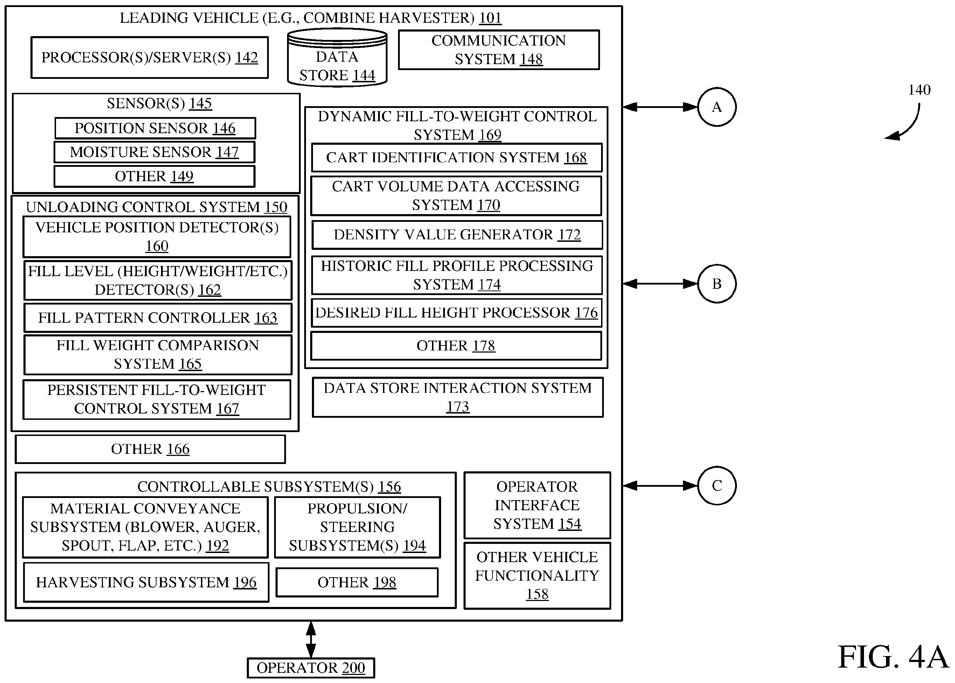

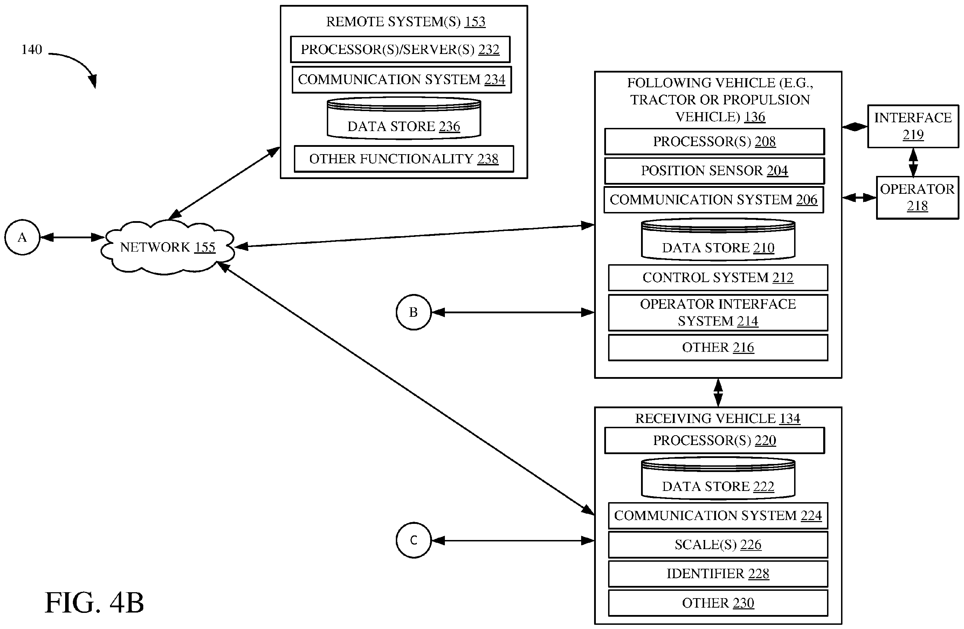

FIGS. 4A and 4B (collectively referred to herein as FIG. 4) show a block diagram showing one example of an agricultural system 140 which includes leading vehicle (in the present example, a combine harvester) 101 which is followed by following vehicle (in the present example, a tractor or another propulsion vehicle) 136. Following vehicle 136 is pulling a receiving vehicle 134. It will be appreciated that while agricultural system 140 shown in FIG. 4 includes leading vehicle 101, following vehicle 136, and receiving vehicle 134 (e.g., the vehicles shown in the example illustrated in FIG. 3) other leading vehicles, following vehicles, and receiving vehicles can be used as well. The example shown in FIG. 4 is shown for the sake of example only.

FIG. 4 also shows that leading vehicle 101, following vehicle 136, and/or receiving vehicle 134 can communicate with one or remote systems 153 (which can be a remote server environment, such as a vendor system, a manufacturer system, a farm manager system, a cloud-based system, or another system) over a network 155. Network 155 can be a wifi network, a cellular network, a wide or local area network, or other network or combination of networks.

Leading vehicle 101 includes one or more processors or servers 142, data store 144, sensor 145 (which can include position sensor 146, moisture sensor 147 and other sensors 149) communication system 148, unloading control system 150, operator interface system 154, controllable subsystems 156, and other vehicle functionality 158. Unloading control system 150 can include vehicle position detector(s) 160, fill level (height/weight/etc.) detector 162, fill pattern controller 163, fill weight comparison system 165, persistent fill-to-weight control system 167, dynamic fill-to-weight control system 169, data store interaction system 173, and other control system functionality 166. Vehicle position detector(s) 160 can include an optical sensor, a RADAR sensor, a LIDAR sensor, and/or other sensors. An optical sensor can include camera 106, an image processor, and/or other items. Dynamic fill-to-weight control system 169 can include cart identification system 168, cart volume data accessing system 170, density value generator 172, historic fill profile processing system 174, desired fill height processor 176, and other items 178. Controllable subsystems 156 can include material conveyance subsystem (e.g., blower, auger, spout, flap, etc.) 192, propulsion/steering subsystem 194, harvesting subsystem 196, and/or other items 198. FIG. 4 also shows that leading vehicle 101 can be operated by an operator 200 by interacting with an operator interface and/or operator interface mechanism(s).

Following vehicle 136 can include position sensor 204, communication system 206, one or more processors or servers 208, data store 210, control system 212, operator interface system 214 and any of a wide variety other functionality 216. FIG. 4 also shows that following vehicle 136 is operated by operator 218 who can interact with interfaces 219 (generated by operator interface system 214) and/or with operator interface mechanisms.

Receiving vehicle 134 can include one or more processors 220, data store 222, communication system 224, scale(s) 226, an identifier 228, and other items 230. Remote system(s) 153 can include processors or servers 232, communication system 234, data store 236, and any of a wide variety of other functionality 238. Before describing the overall operation of agricultural system 140 in more detail, a description of some of the items in system 140, and their operation, will first be provided.

Position sensor 146 can be a global navigation satellite system (GNSS) receiver, a dead reckoning system, a cellular triangulation system, or any of a wide variety of other systems that identify the coordinates or location of leading vehicle 101 in a global or local coordinate system. Moisture sensor 149 can sense a characteristic of the moisture of the material being loaded. Sensor 149 can be a capacitive sensor, a probe, or other sensor. Data store 144 can store dimension information and orientation information, such as information that identifies the location and orientation of optical sensor 106 relative to the material conveyance system (e.g., blower, auger, spout, flap, etc.) 186. Data store 144 can store other information as well, such as volume profile information corresponding to receiving vehicle 134 indexed by identifier 228, material density information indicative of a density of material being loaded, and other information.

Communication system 148 enables the communication of items on vehicle 101 with other items on vehicle 101, as well as communication with following vehicle 136, vehicle 134, remote system(s) 153, and/or other communication. Therefore, communication system 148 can be a controller area network (CAN) bus and bus controller, a cellular communication device, a wifi communication device, a local or wide area network communication device, a Bluetooth communication device, and/or any of a wide variety of devices or systems that enable communication over different types of networks or combinations of networks.

Unloading control system 150 controls the unloading process by which material conveyance subsystem 192 conveys material from leading vehicle 101 to receiving vehicle 134. Vehicle position detectors 160 sense parameters indicative of the position of the receiving vehicle 134. In the example discussed herein, detectors 160 can detect structural portions of receiving vehicle 134 that allow the location of the receiving area of receiving vehicle 134 to be determined. The structural portions, for example, may be the front wall or top front edge of the receiving vehicle 134, the side walls or top side edges of receiving vehicle 134, the rear wall or the top rear edge of receiving vehicle 134, etc. Therefore, vehicle position detectors 160 can include a camera 106 and an image processor or other detectors. In other examples, vehicle position detector(s) 160 can include a RADAR sensor, and/or a LIDAR sensor, and/or sensor(s). Such sensors can have signal processing systems that process the signals generated by RADAR and LIDAR sensors and/or other sensor(s) to identify the receiving vehicle parameters. Detector(s) 160 can include other sensors and processing systems as well.

Vehicle position detectors 160 can detect or derive the position of leading vehicle 101 and following vehicle 136 either in terms of absolute coordinates within a global or local coordinate system, or in terms of a relative position in which the positions of vehicles 101 and 136 are determined relative to one another. For instance, vehicle position detector(s) 160 can receive an input from position sensor 146 on vehicle 101 and from position sensor 204 (which may also be a GNSS receiver, etc.) on following vehicle 136 to determine where the two vehicles are located relative to one another. Vehicle position detector(s) 160 can then detect the location of receiving vehicle 134 relative to the material conveyance subsystem 192. This location can then be used to determine how to control vehicles 101 and 136 to perform an unloading operation so that material conveyance subsystem 192 loads material into receiving vehicle 134 according to a desired fill pattern.

Fill level detector 162 can detect the fill level (e.g., the fill height) of material in receiving vehicle 134. For instance, the fill level detector 162 can include camera 106 and an image processing system that detects the level of material in receiving vehicle 134 relative to the top edge of receiving vehicle 134. Fill level detector 162 may receive a weight signal from scale 226 on receiving vehicle 134 (directly, via following vehicle 136, and/or via remote system 153) and identify the fill level of material in receiving vehicle 134 based on the weight signal and any estimated or measured density metric indicative of the density of the material. Fill level detector 162 can detect the fill level in other ways as well.

Fill pattern controller 163 generates control signals that can be used to control vehicle 101 and following vehicle 136 to accomplish the desired fill pattern. For instance, fill pattern controller 153 can generate control signals to control the material conveyance subsystem 192 to start or stop material conveyance, to control the spout position or flap position in order to control the trajectory of material that is being conveyed to receiving vehicle 134, and/or to control the propulsion/steering subsystem 194. Fill pattern controller 163 can also generate control signals that are sent by communication system 148 to the following vehicle 136 to "nudge" the following vehicle forward or rearward relative to leading vehicle 101, to instruct the operator 208 of following vehicle 136 to perform a desired operation, or to generate other control signals.

For instance, fill pattern controller 163 may receive an input from fill level detector 162 that is indicative of the fill level of material in receiving vehicle 134 at the current landing point in receiving vehicle 134. In one example, fill level detector 162 can receive the scale signal from scale 226 indicative of the weight of material at the current landing point in receiving vehicle 134 (e.g., the increase in the weight of the material since material has been loaded at the landing point). When the weight of material at the current loading point reaches a desired level, then a nudge may be issued by fill pattern controller 163 in order to change the landing point to accomplish the desired fill pattern. In another example, fill level detector 162 can receive the scale signal and a density value indicative of the density of the material and generate a fill level indicative of a volume or level of material at the current landing point based on the scale signal and the density value. The nudge can be issued based on the fill level.

In yet another example, the fill level detector 162 can detect the fill level of material at the current landing point using camera 106 and an image processing system. When the fill level at the current landing point is within a threshold level of the top of receiving vehicle 134 (or a desired fill level), then a nudge may be issued in order to move the position of the landing point where material is being conveyed to receiving vehicle 134 to a different landing point, in order to accomplish a desired fill pattern. As an example, in a front to back fill pattern, once the current landing point is at a desired level, then a nudge may be issued to move receiving vehicle 134 forward relative to material conveyance subsystem 192.

Weight comparison system 165 receives the scale signal from scale 226 on receiving vehicle 134. The scale signal identifies the weight of material that has been loaded into receiving vehicle 134. The scale signal can be sent directly from receiving vehicle 134 to leading vehicle 101, or the scale signal can be sent to following vehicle 136 where it is then sent directly to leading vehicle 101. Similarly, the scale signal can be sent from either receiving vehicle 134 or following vehicle 136 over network 155 to remote system 153 (such as using cellular communication). Remote system 153 can then use communication system 234 to send the scale signal (again using cellular communication over network 155) to leading vehicle 101. Fill weight comparison system 165 obtains a weight limit corresponding to receiving vehicle 134 and compares the weight indicated by the scale signal to the weight limit to determine whether the weight of material in receiving vehicle 134 is approaching the weight limit. In one example, the weight limit may identify an overall weight limit for receiving vehicle 134. In another example, the weight limit may also identify a weight of material that is to be unloaded at the current landing point in receiving vehicle 134 before a nudge operation is performed to move to a different landing point. Fill weight comparison system 165 can receive the identifier 228 identifying receiving vehicle 134 and access the weight limit information from data store 144, or the weight limit information can be sent from receiving vehicle 134 (using communication system 224) or from following vehicle 136 (using communication system 206) or from remote system 153 (using communication system 234).

Persistent fill-to-weight control system 167 performs a persistent fill-to-weight control operation to control the unloading operation. System 167 allows fill pattern controller 163 to control the filling operation based upon the height of material or weight of material in receiving vehicle 134 and the desired height of material, and/or the desired weight of material, in order to execute a fill pattern (such as a front-to-back fill pattern). At the same time, persistent fill-to-weight control system 167 receives the output from fill weight comparison system 165 to determine whether the weight of material in receiving vehicle 134 is approaching the overall weight limit. If so, system 165 generates a signal indicating that the weight of material in receiving vehicle 134 is approaching the overall weight limit and provides that signal to persistent fill-to-weight control system 167. System 167 generates control signals to control material conveyance subsystem 192 to stop the flow of material before the weight limit is reached. In one example, persistent fill-to-weight control system 167 accounts for the latency in communication of the scale signal from scale 226 to fill weight comparison system 165, and for the latency in controlling material conveyance subsystem 192 and/or any other latency, to stop material unloading.

Dynamic fill-to-weight control system 169 performs a dynamic fill-to-weight operation in conveying material to receiving vehicle 134. Cart identification system 168 identifies receiving vehicle 134 using identifier 228 (which may be communicated to receiving vehicle 101 or read by a reader on receiving vehicle 101, or otherwise obtained). Based on the identifier 228, cart volume data accessing system 170 accesses data that describes the volume or volume profile of receiving vehicle 134. The volume data may be dimension and shape information and/or may be indicative of how the volume of the receiving vehicle 134 changes along a front-to-back axis of receiving vehicle 134, or other volume data. The volume data can be obtained from data store 144, from remote system 153, based on an operator input from following vehicle 136, or in other ways. Density value generator 172 generates an estimated, calculated, or measured density value indicative of the density of material being loaded into receiving vehicle 134. For instance, density value generator 172 may receive an input indicating the type of crop being harvested by leading vehicle 101 and a moisture signal from moisture sensor 147. Based upon these two items of information, density value generator 172 can generate an estimated density value. Based upon the volume profile of receiving vehicle 134 and the estimated, measured, or calculated density value, desired fill height processor 176 calculates a desired fill height for receiving vehicle 134 so that material can be loaded into receiving vehicle 134, to the desired fill height, without exceeding the weight limitations or restrictions for receiving vehicle 134. That desired fill height can then be output to fill pattern controller 163 which controls material conveyance subsystem 192 to conduct the unloading operation (e.g., according to a desired fill pattern), filling receiving vehicle 134 to the desired fill height output by desired fill height processor 176.

There may be instances where no volume profile data is available for receiving vehicle 134. In that case, the receiving vehicle 134 can be filled using the persistent fill-to-weight operation conducted by system 167. However, historic fill profile processing system 174 can identify the profile (or height) of material in receiving vehicle 134 at the conclusion of the fill process (e.g., when the desired weight of material was loaded into receiving vehicle 134) during a previous fill operation.

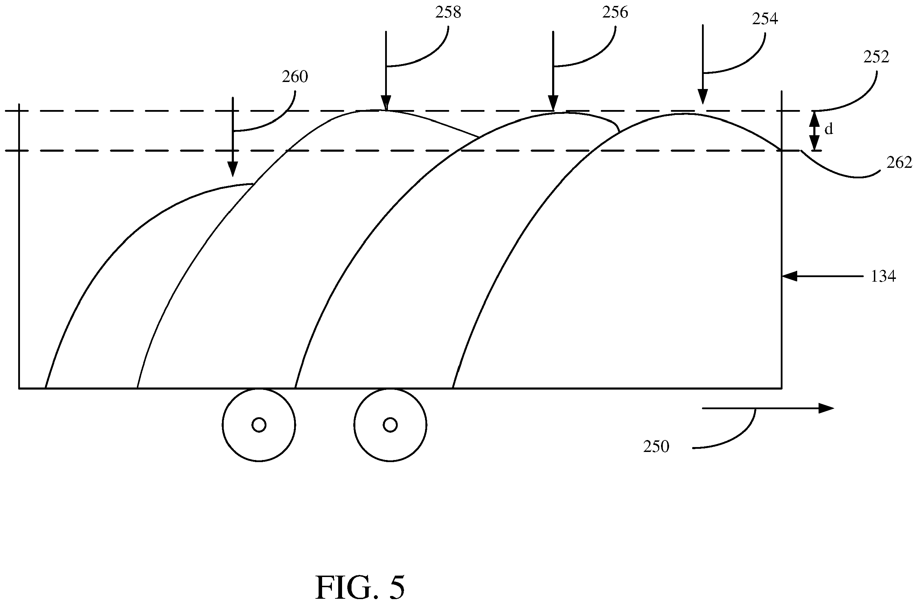

For instance, and referring to FIG. 5A, assume that FIG. 5A shows a side cut away view of receiving vehicle 134 which is traveling in a direction indicated by arrow 250. Assume further that a desired fill height 252 has been established for receiving vehicle 134 and that material conveyance subsystem 192 is conveying material into receiving vehicle 134 according to a front-to-back fill pattern. Therefore, material may be loaded into receiving vehicle 134 at a first landing point indicated by arrow 254 until fill level detector 162 detects that the material has reached the desired fill height 252 at which point the following vehicle 136 is nudged forward so that material is now being loading into receiving vehicle 134 at the new landing point indicated by arrow 256. Again, assume that the weight limitations or restrictions have not yet been reached for receiving vehicle 134 and that the material reaches the desired fill height 252, in which case the receiving vehicle 134 is again nudged forward so that the new landing point is now indicated by arrow 258. Again, assume that the material reaches the desired fill height 252 and the weight of the material has not yet reached the weight limits or weight restrictions so that receiving vehicle 134 is again nudged forward until the new landing point is indicated by arrow 260.

However, now assume that, even though the material level has not yet reached the desired fill height 252, the overall weight limit or weight restriction corresponding to receiving vehicle 134 has been met so that persistent fill-to-weight control system 167 stops the filling operation with the resultant material profile as shown in FIG. 5A. System 167 can store that material profile in data store 164 for receiving vehicle 134 so that the next time receiving vehicle 134 is being loaded, historic profile processing system 174 can access the prior material profile information and determine that receiving vehicle 134, during the previous unloading operation, was not evenly filled when its weight limits or restrictions were reached. In that case, this information can be provided from historic profile processing system 174 to desired fill height processor 176 which calculates a new desired fill height represented by dashed line 262 in FIG. 5A. The new desired fill height 262 is output to fill pattern controller 163 and persistent fill-to-weight control system 167 again conducts the persistent fill-to-weight operation so that material is filled to the new desired fill height 262 (under the control of fill pattern controller 163) until either receiving vehicle 134 is uniformly loaded to the new fill height 262, or until the weight restrictions or limitations corresponding to receiving vehicle 134 have been reached. In one example, depending upon the unused volume in receiving vehicle 134 during a previous fill operation, desired fill height processor 176 can lower the desired fill height by a distance d. The distance d may be a predetermined or fixed value (such as 5 centimeters or 10 centimeters). In another example, the distance d may be dynamically selected based upon the open or unused volume in receiving vehicle 134 during a previous unloading operation. For instance, if the unused volume in receiving vehicle 134 is larger (when compared to a reference value), then the distance d by which the desired fill height is lowered for the subsequent unloading operation may increase over a scenario in which the unused volume in receiving vehicle 134 during the previous unloading operation is relatively small (when compared to a reference value).

Data store interaction system 173 can be used by any of the other items in unloading control system 150 to interact with data store 144, or one of the other data stores 236, 210, or 222, to obtain such things as the volume profile information for receiving vehicle 134, density information, desired fill level, weight limits or restrictions, etc.

As mentioned, operator interface system 154 can generate interfaces for operator 200 and receive inputs from operator 200. Therefore, operator interface system 154 can include interface mechanisms such as a steering wheel, joysticks, pedals, buttons, displays, levers, linkages, etc. Interfaces can be generated for interaction by operator 200, such as on a display screen, a touch sensitive display screen, or in other ways. Operator interface system 154 can detect operator interactions with the displayed interface, such as the operator actuating icons, links, buttons, etc. Operator 200 can interact with the interface(s) using a keyboard or keypad, a point and click device, touch gestures, speech commands (where speech recognition and/or speech synthesis are provided), or in other ways.

On following vehicle 136, position sensor 204 may be a global navigation satellite system (GNSS) receiver, a dead reckoning system, a cellular triangulation system, or any of a wide variety of other systems that provide coordinates of following vehicle 136 in a global or local coordinate system, or that provide an output indicating the position of following vehicle 136 relative to a reference point (such as relative to leading vehicle 101), etc. Communication system 206 allows the communication of items on vehicle 136 with one another, and also provides for communication with leading vehicle 101, receiving vehicle 134, remote system(s) 153, and/or other systems. Therefore, communication system 206 can be similar to communication system 148 discussed above, or different. It will be assumed for the purpose of the present discussion that communication systems 148 and 206 are similar, although this is for the sake of example only. Data store 210 can store dimension data which identify different dimensions of following vehicle 136, the location and/or orientation of different sensors on vehicle 136, kinematic information describing vehicle 134 and/or vehicle 136, and other information. Control system 212 can be used to receive inputs and generate control signals. The control signals can be used to control communication system 206, operator interface system 214, data store 210, the propulsion and/or steering subsystem on following vehicle 136, other controllable subsystems, and/or other items. Operator interface system 204 can also include interface generator 220 that can generate interfaces 219. Operator interface system 214 can also include operator interface mechanisms, such as a steering wheel, joysticks, buttons, levers, pedals, linkages, etc. Operator interface system 214 can also include a display screen that can be used to display operator interfaces 219 for interaction by operator 218. Operator 218 can interact with the operator interfaces using a point and click device, touch gestures, voice commands, etc.

On receiving vehicle 134, data store 222 may store volume profile information for receiving vehicle 134, weight restrictions or limitations for receiving vehicle 134, or other information. Communication system 224 facilitates communication among the various items on receiving vehicle 134 with one another and also facilitates communication with leading vehicle 101, with following vehicle 136, with remote system(s) 153 over network 155, and/or other communication. Therefore, communication system 224 can be similar to, or different from, communication system 148. It will be assumed that communication system 224 is similar to communication system 148 so that no further description is provided, although this is just one example.

Scale(s) 226 may be implemented as load cells in the axle of receiving vehicle 134, or scale(s) 226 may be implemented in a wide variety of other ways. Scale(s) 226 illustratively provide an output signal indicative of the weight of material loaded into receiving vehicle 134. Identifier 228 may be a visual identifier that can be captured by camera 106 on leading vehicle 101, an RFID tag that can be read by another component, or other indicia that can be accessed and that identifies receiving vehicle 134. Identifier 228 may uniquely identify receiving vehicle 134 or may identify the type of receiving vehicle 134, such as its make and model, or other identifying information.

In remote system 153, communication system 234 illustratively facilitates communication of the items of remote system 153 with one another and also facilitates communication over network 155. Network 155 may be a wide area network, a local area network, a near field communication network, a wifi communication network, a cellular communication network, a Bluetooth communication network, or any of a wide variety of other networks or combinations of networks. Therefore, any of the communication systems 148, 206, 224, and/or 234 may be configured to communicate over network 155. Data store 236 can store volume profile information for different receiving vehicles, including receiving vehicle 134. Data store 236 may also include desired fill heights, density information indicative of the density of the material being loaded, weight limits or restrictions corresponding to receiving vehicle 134, the historic fill profile information that is generated by persistent fill-to-weight control system 167, and/or any of a wide variety of other information.

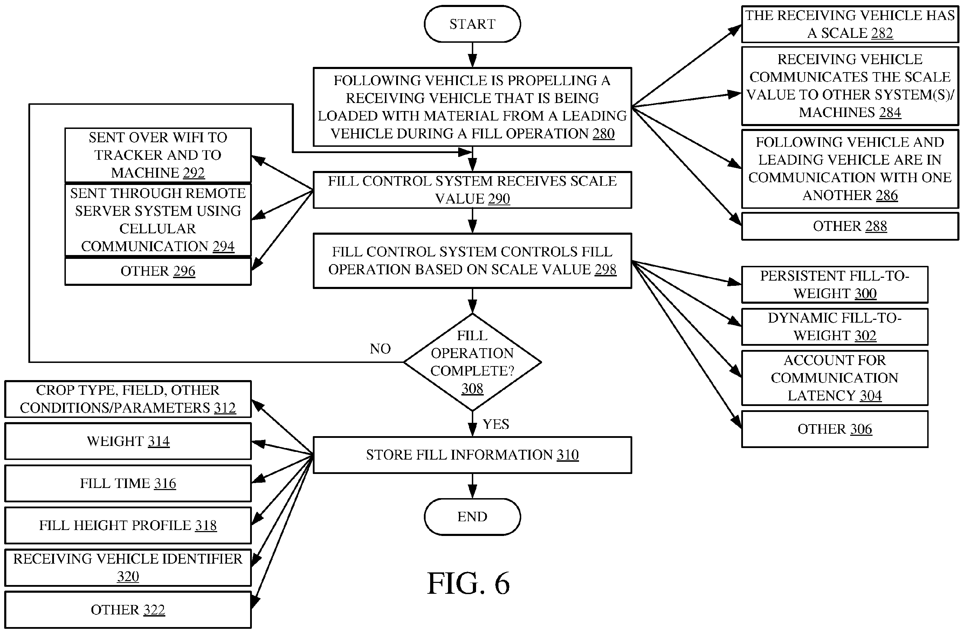

FIG. 6 is a flow diagram illustrating one example of the operation of agricultural system 140 (shown in FIG. 4) in performing a fill operation. It is assumed that the following vehicle 136 is propelling receiving vehicle 134. Receiving vehicle 134 is being loaded with material from leading vehicle 101 during a fill operation. This scenario is illustrated by block 280 in the flow diagram of FIG. 6. In one example, it is assumed that receiving vehicle 134 has one or more scale(s) 226, as indicated by block 282 and that in one example, receiving vehicle 134 uses a communication system 224 to communicate the scale value to other systems 153 over network 155 using a cellular or other communication channel. Communication system 224 can also communicate the scale value directly to leading vehicle 101 using a wifi or other communication channel. Communication system 224 can also communicate the scale value to following vehicle 136 using a CAN bus, a wifi communication channel, a cellular communication channel, or another communication channel. Having receiving vehicle 134 communicate the scale value to other systems or machines is indicated by block 284 in the flow diagram of FIG. 6. In one example, receiving vehicle 134 and following vehicle 136 are in communication with one another, as indicated by block 286. The following vehicle 136 and leading vehicle 101 as well as receiving vehicle 134 can be arranged in other ways as well, as indicated by block 288.

At some point, using one of the communication channels, unloading control system 150 receives the scale value, as indicated by block 290. For instance, the scale value can be sent from receiving vehicle 134 to following vehicle 136 and then sent from following vehicle 136 to leading vehicle 101 over a wifi communication channel, as indicated by block 292. In another example, the scale value can be sent either from receiving vehicle 134 or following vehicle 136 to leading vehicle 101 through remote system 153 via network 155, as indicated by block 294. Such a communication channel may employ cellular communication and/or other types of communication channels. The scale value can be sent from receiving vehicle 134 to leading vehicle 101 in other ways as well, as indicated by block 296.

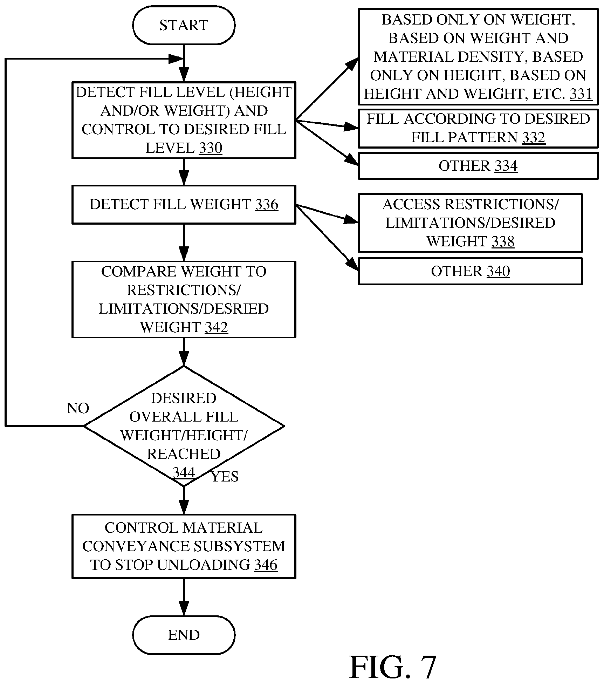

The unloading control system 150 controls the fill operation based upon the received scale value, as indicated by block 298. For instance, vehicle position detector 160 can detect the position of receiving vehicle 134 relative to material conveyance subsystem 192 and control the landing point of material in receiving vehicle 134. The fill level detector 162 can detect the fill level (in terms of height and/or weight) and fill pattern controller 163 can control the fill operation according to a desired fill pattern. Fill weight comparison system 165 can compare the sensed fill weight (indicated by the scale value) to a weight of material to be loaded at a current landing point and/or to an overall weight restriction or limitation for receiving vehicle 134, and persistent fill-to-weight control system 167 can perform a persistent fill-to-weight operation as discussed above, and as discussed in greater detail below with respect to FIG. 7. Performing a persistent fill-to-weight operation is indicated by block 300 in the flow diagram of FIG. 6. For example, system 167 can control fill pattern controller 163 to fill the receiving vehicle 134 according to a desired fill pattern based on the scale value, based on the scale value and a material density value, and/or based on a fill height sensed by camera 106 or other information.

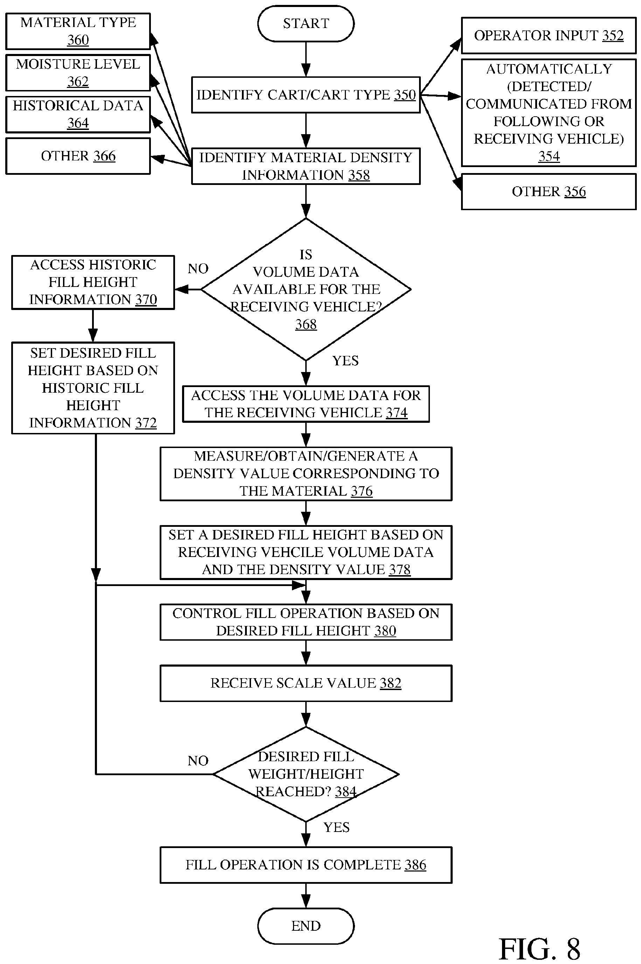

In another example, dynamic fill-to-weight control system 168 can perform a dynamic fill-to-weight operation, as discussed in greater detail above, and as also discussed in greater detail below with respect to FIG. 8. Performing a dynamic fill-to-weight operation is indicated by block 302 in the flow diagram of FIG. 6.

In one example, unloading control system 150 accounts for the latency in communication between items of unloading control system 150 and other machines 136 and/or 134, and/or remote systems 153. Unloading control system 150 also illustratively accounts for latency in communication with material conveyance subsystem 192 and/or in performing nudge operations and/or other controllable subsystems 156. Performing the fill control operation or unloading operation while accounting for communication and operational latency is indicated by block 304 in the flow diagram of FIG. 6. The fill control system can control the fill operation based on the scale value in other ways as well, as indicated by block 306.

Until the fill operation is complete, as determined at block 308, processing reverts to block 290 where unloading control system 150 continues to receive the scale value and control the fill or unloading operation. Once the fill operation is complete, then data store interaction system 123 can store fill information corresponding to the just-completed fill operation, as indicated by block 310. The fill information can be stored in data store 144, data store 236, data store 210, and/or data store 224 or elsewhere. The fill information may include information such as the crop type, a field identifier identifying the field that was harvested, other environmental conditions or parameters, etc., as indicated by block 312. The fill information may include the weight of information loaded into receiving vehicle 134, as indicated by the scale value, and as illustrated by block 314 in the flow diagram of FIG. 6. The stored fill information may include the duration of the fill operation, as indicated by block 316, the fill height or fill profile indicative of the height or weight of material at different points in receiving vehicle 134 to which the material was filled, as indicated by block 318, the receiving vehicle identifier 228 that was just filled, as indicated by block 320, and/or any of a wide variety of other fill information 322.

FIG. 7 is a flow diagram illustrating one example of the operation of agricultural system 140 in performing a persistent fill-to-weight operation. It is first assumed that fill level detector 162 is detecting the level (height and/or weight) of material loaded into receiving vehicle 134 and that fill pattern controller 163 is controlling the fill operation to fill the material to a desired fill level, as indicated by block 330 in the flow diagram of FIG. 7. Fill pattern controller 163 can control unloading in various ways. Fill pattern controller 163 can control unloading based only on the weight of material unloaded at the current landing point (e.g., when a desired weight has been unloaded at the current landing point, nudge to the next landing point). Fill pattern controller 163 can control unloading based on the weight of material and the density of material (e.g., calculate an estimated volume of material unloaded at the current landing point based on the weight and density and when the desired volume has been reached, nudge to the next landing point). Fill pattern controller 163 can control unloading based only on the detected height of material at the current landing point or based on the height and weight of material at the current landing point, as indicated by block 331. In one example, fill pattern controller 163 is controlling the controllable subsystems 156 and/or is nudging following vehicle 136 to perform the fill operation according to a desired fill pattern (e.g., front-to-back, back-to-front, etc.) as indicated by block 332. The fill pattern controller 163 can be controlling the fill operation to fill receiving vehicle 134 in other ways as well, as indicated by block 334.

Fill weight comparison system 165 accesses overall weight restrictions or limitations corresponding to receiving vehicle 134 or another desired weight limit value corresponding to receiving vehicle 134 and also receives the scale value from scale 226 indicating the weight of material that has been loaded into receiving vehicle 134. Detecting the fill weight from the scale value is indicated by block 336, and accessing the overall restrictions/limitations/other desired weight is indicated by block 338 in the flow diagram of FIG. 7. The weight and other information can be detected or obtained in other ways as well, as indicated by block 340.

Fill weight comparison system 165 then compares the weight indicated by the scale value to the overall restrictions, limitations, and/or other desired weight to determine whether a desired fill weight has been reached. Comparing such weight values is indicated by block 342 in the flow diagram of FIG. 7 and determining whether a desired fill weight has been reached is indicated by block 344. In one example, the desired fill weight may be a weight that is a threshold value below the weight overall restrictions or limitations corresponding to receiving vehicle 134. This is just one example.

Persistent fill-to-weight control system 167 then generates control signals to control material conveyance subsystem 192 to stop unloading once the desired fill weight has been reached. Controlling the material conveyance subsystem 192 in this way is indicated by block 346 in the flow diagram of FIG. 7. Therefore, fill pattern controller 163 continues to control the unloading operation to fill receiving vehicle 134 according to a desired fill pattern, based upon the height and/or weight of the material in receiving vehicle 134. However, at the same, persistent fill-to-weight control system 167 can limit the unloading operation so that it terminates when, or before, the desired overall fill weight is reached. If the fill pattern is completed (e.g., desired fill level is reached) before the desired overall fill weight, then persistent fill-to-weight control system 167 also controls the material conveyance subsystem 192 to stop loading material into receiving vehicle 134. However, even where the desired fill pattern has not been completed (e.g., the fill has not been reached across the entire receiving vehicle 134), persistent fill-to-weight control system 167 still controls the material conveyance subsystem 192 to stop loading material into receiving vehicle 134 if the desired overall fill weight has been reached. Thus, receiving vehicle 134 can be filled in a desired way, according to a desired fill pattern, without exceeding the overall weight limitations or restrictions (or another desired fill weight) corresponding to receiving vehicle 134.

FIG. 8 is a flow diagram illustrating one example of the operation of agricultural system 140 in performing a dynamic fill-to-weight operation. Cart identification system 169 first identifies the cart or cart type (or other type) of receiving vehicle 134, as indicated by block 350 in the flow diagram of FIG. 8. The identifier 228 can be provided to cart identification system 168 by means of operator input from operator 218 or operator 200, as indicated by block 352. Identifier 228 can be automatically detected or communicated from the following vehicle 136 or receiving vehicle 134, as indicated by block 354 in the flow diagram of FIG. 8. The identifier 228 may correspond to an identifying feature of following vehicle 136 (such as the vehicle identification number - VIN of following vehicle 136) or identifier 228 may be another type of identifier. Identifying receiving vehicle 134 can be done in other ways as well, as indicated by block 356.

Density value generator 172 identifies material density information that is indicative of the density of material being loaded from leading vehicle 101 into receiving vehicle 134, as indicated by block 358 in the flow diagram of FIG. 8. The material density information may be material type information 360 which identifies the type of material (such as the crop type, hybrid, etc.) as well as moisture level information 362 indicative of the moisture level of the material. The moisture level information 362 may be measured by moisture sensor 149, or obtained from historical data or from weather data, or in other ways. The material density information can include historical density information 364 that is obtained from remote systems 153 or another data source. The material density information can be identified in a wide variety of other ways 366, and can include other information as well.

Cart volume data accessing system 170 then determines whether volume data (e.g., data that defines the volume or volume profile of receiving vehicle 134) is available for the receiving vehicle 134 that is being loaded or that is about to be loaded. Determining whether the volume data is available for receiving vehicle 134 is indicated by block 368 in the flow diagram of FIG. 8. If not, then historic fill profile processing system 174 accesses historic fill height information indicative of the fill height or fill height profile of receiving vehicle 134 during a prior fill operation. For instance, again referring to FIG. 5, the historic fill profile information may be the information showing the fill level illustrated in FIG. 5 for receiving vehicle 134 when receiving vehicle 134 met the weight limitations or restrictions during the last time it was filled. Accessing the historic fill height information for receiving vehicle 134 is indicated by block 370 in the flow diagram of FIG. 8. The historic fill height information or fill profile information is provided to desired fill height processor 176 which generates a desired fill height for receiving vehicle 134, for the current fill operation, based upon the historic fill profile information. For instance, if the historic fill profile is that shown in FIG. 5 and the previous desired fill height is illustrated by dashed line 252, then desired fill height processor 176 may lower the desired fill height by a distance d to a new desired fill height 262. Setting the desired fill height based upon the historic fill height and/or fill profile information is indicated by block 372 in the flow diagram of FIG. 8.

If, at block 368, cart volume data accessing system 170 determines that cart volume data is available for the receiving vehicle 134, then cart volume data accessing system 170 accesses that volume data as indicated by block 374 in the flow diagram of FIG. 8. The cart volume data can be accessed from any of a variety of different data stores.

Density value generator 172 also measures, obtains, or otherwise generates a density value corresponding to the material being loaded into receiving vehicle 134. Measuring, obtaining, or otherwise generating a density value is indicated by block 376 in the flow diagram of FIG. 8.

The cart volume data and density value are then provided to desired fill height processor 176. Desired fill height processor 176 generates a desired fill height for receiving vehicle 134 based upon the receiving vehicle volume data and the density value. For instance, desired fill height processor 174 can calculate or estimate the volume of material that can be loaded into receiving vehicle 134 without exceeding the weight limitations or restrictions corresponding to receiving vehicle 134. Then, using the volume profile of receiving vehicle 134, desired fill height processor 174 can calculate a desired fill height which will accommodate the volume of material that can be loaded into receiving vehicle 134 without exceeding the weight limitations or restrictions. Setting a desired fill height based upon the receiving vehicle volume data and the density value is indicated by block 378 in the flow diagram of FIG. 8.

Once the desired fill height has been generated then fill pattern controller 163 controls the fill operation based upon the desired fill height, as indicated by block 380. Because, in one example, the desired fill height was generated given the volume data for the receiving vehicle 134 and the density value for the material being loaded, the material should be able to be filled to the desired fill height across receiving vehicle 134 without exceeding the weight limitations or restrictions corresponding to receiving vehicle 134. However, it may be that the density of the material changes (e.g., the moisture level changes) across the field, or the desired fill height is incorrect for other reasons. In that case, fill weight comparison system 165 continues to receive the scale value indicating the weight of material loaded into receiving vehicle 134, as indicated by block 382. Until the desired fill weight and/or the desired fill height have been reached, processing reverts to block 380 where fill pattern controller 163 continues to control the fill operation based on the desired fill height. Once either the desired fill weight or the desired fill height have been reached, as determined at block 384, then the fill operation for receiving vehicle 134 is complete, as indicated by block 386.

It will be noted that, in one example, the desired fill weight may be calculated to account for any processing latency (communication latency, actuator latency, etc.) in agricultural system 140. An estimate can be made of the amount of material that will be transferred during the communication latency and actuator latency incurred by receiving the scale value and turning off the material conveyance subsystem 192. The desired fill weight may be set a threshold level below the maximum fill weight as defined by the fill weight restrictions or limitations for receiving vehicle 134. The threshold level may be based on the estimated amount of material transferred during the latency. This helps to ensure that receiving vehicle 134 will not be overfilled.

It can thus be seen that the present description describes a system which considers the weight of material being loaded into a receiving vehicle, in controlling the unloading operation. The receiving vehicle can be loaded to a desired fill height, so long as a desired fill weight is not exceeded. The present system controls the unloading operation to stop once the desired fill weight is met, even if the receiving vehicle is not full to a desired fill height. The present description also describes a system that can modify the desired fill height based upon the estimated or calculated weight of material being transferred to the receiving vehicle to obtain a more even fill in the receiving vehicle without exceeding the desired fill weight.

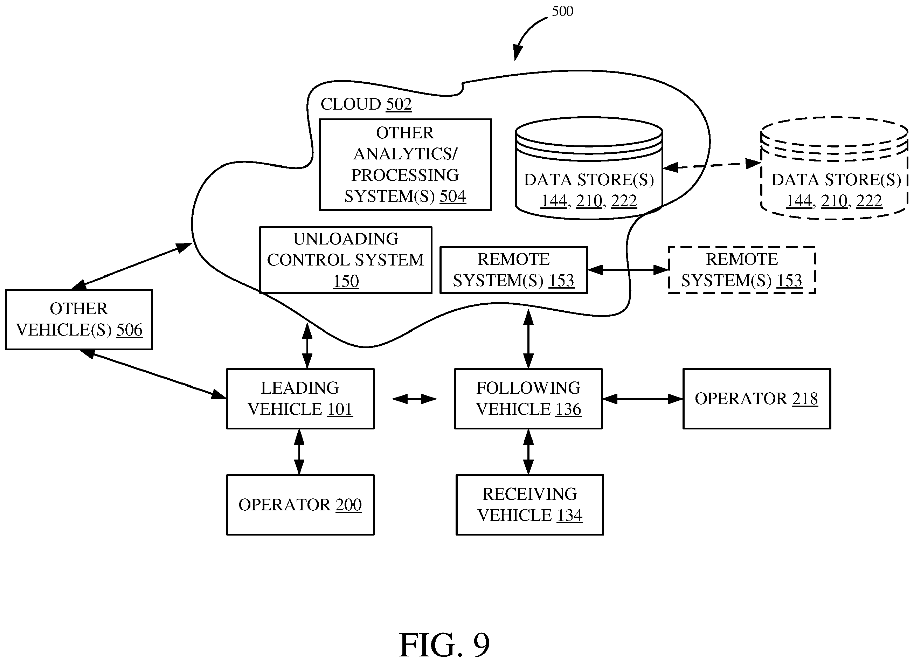

FIG. 9 is a block diagram illustrating agricultural system 140, shown in FIG. 4, except that system 140 is disposed in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, they can be provided from a conventional server, or they can be installed on client devices directly, or in other ways.

In the example shown in FIG. 9, some items are similar to those shown in FIG. 4 and they are similarly numbered. FIG. 9 specifically shows that data stores 144, 210, unloading control system 150, and other systems (such as analytics or processing systems) 504, can be located at a remote server location 502. Therefore, vehicles 101, 136 can access those systems through remote server location 502.

FIG. 9 also depicts another example of a remote server architecture. FIG. 7 shows that it is also contemplated that some elements of FIG. 4 can be disposed at remote server location 502 while others are not. By way of example, one or more of data stores 144, 210 and other systems 504, or other items can be disposed at a location separate from location 502, and accessed through the remote server at location 502. Regardless of where the items are located, the items can be accessed either directly by machine 101, 134 and/or machine 136, through a network (either a wide area network or a local area network), the items can be hosted at a remote site by a service, or the items can be provided as a service, or accessed by a connection service that resides in a remote location. Also, the data can be stored in substantially any location and intermittently accessed by, or forwarded to, interested parties. All of these architectures are contemplated herein.

FIG. 9 shows that other vehicles 506 can communicate with one or more vehicles 101, 136, or with remote server environment 502. It will also be noted that the elements of FIG. 4, or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

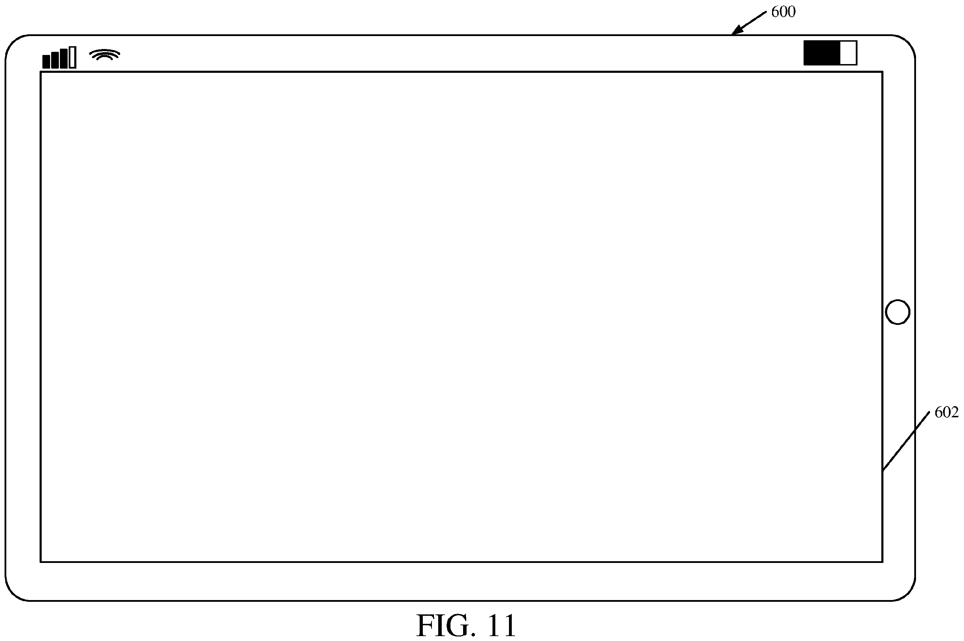

FIG. 9 is a simplified block diagram of one illustrative example of a handheld or mobile computing device that can be used as a user's or client's hand held device 16, in which the present system (or parts of it) can be deployed. For instance, a mobile device can be deployed in the operator compartment of one or both of vehicles 101, 136 for use in generating, processing, or displaying the calibrated offset values. FIGS. 11-12 are examples of handheld or mobile devices.

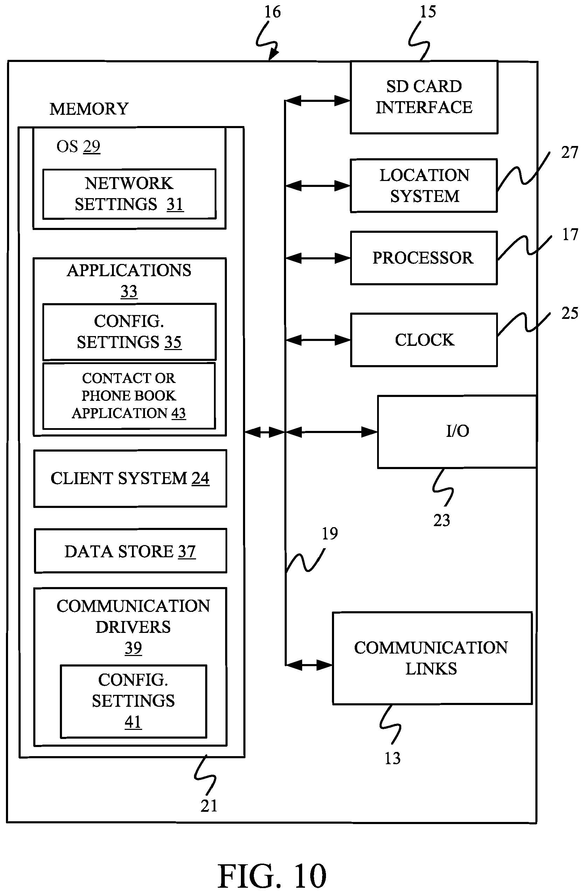

FIGS. 10 provides a general block diagram of the components of a client device 16 that can run some components shown in FIG. 4, that interacts with them, or both. In the device 16, a communications link 13 is provided that allows the handheld device to communicate with other computing devices and in some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 11 shows one example in which device 16 is a tablet computer 600. In FIG. 11, computer 600 is shown with user interface display screen 602. Screen 602 can be a touch screen or a pen-enabled interface that receives inputs from a pen or stylus. Tablet computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

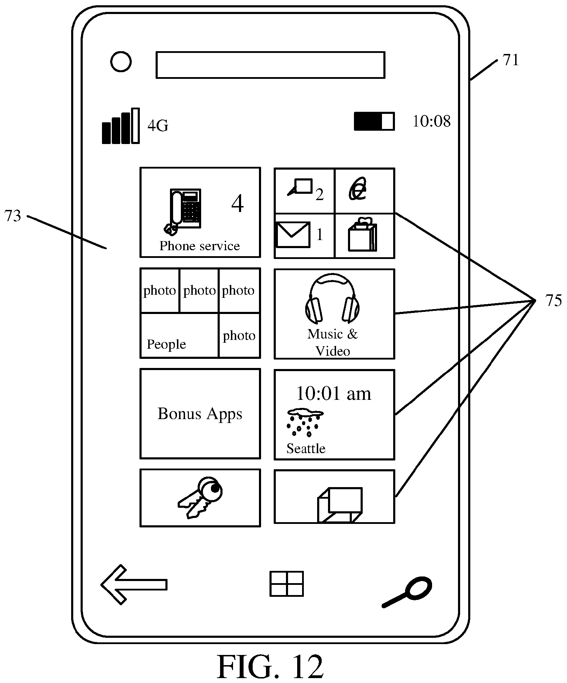

FIG. 12 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

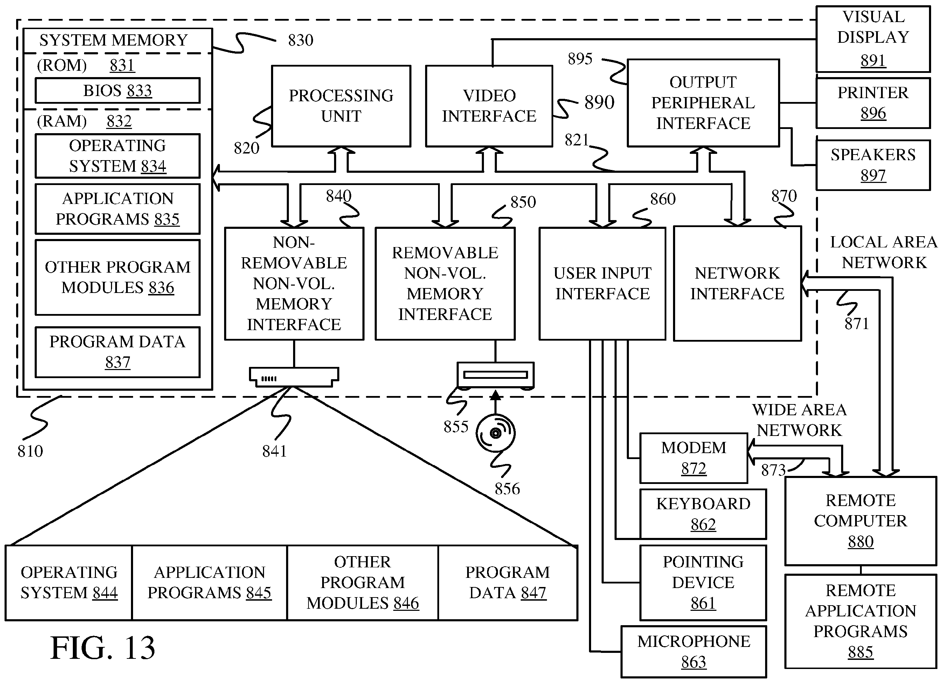

FIG. 13 is one example of a computing environment in which elements of FIG. 4, or parts of it, (for example) can be deployed. With reference to FIG. 13, an example system for implementing some embodiments includes a computing device in the form of a computer 810 programmed to operate as discussed above. Components of computer 810 may include, but are not limited to, a processing unit 820 (which can comprise processors from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to FIG. 4 can be deployed in corresponding portions of FIG. 13.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 13 illustrates operating system 834, application programs 835, other program modules 836, and program data 837.

The computer 810 may also include other removable/non-removable volatile/nonvolatile computer storage media. By way of example only, FIG. 13 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 13, provide storage of computer readable instructions, data structures, program modules and other data for the computer 810. In FIG. 13, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 13 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method, comprising:
performing (280) an unloading operation to unload material from a leading vehicle into a receiving vehicle;
detecting (290) a weight of the material in the receiving vehicle; and
controlling (298) the unloading operation based on the weight of the material.

2. The method of claim 1 and further comprising:
detecting (330) a fill level of the material in the receiving vehicle.

3. The method of claim 2 wherein detecting a fill level comprises:
detecting (331) the fill level based on the detected weight of the material.

4. The method of claim 2 wherein controlling comprises:
controlling (344) the unloading operation to unload the material according to a fill pattern based on the fill level.

5. The method of claim 1 wherein controlling the unloading operation comprises:
receiving (336) a desired weight value corresponding to the receiving vehicle;
comparing (342) the desired weight value to the weight of the material in the receiving vehicle to obtain a comparison result; and
controlling (344) the unloading operation based on the comparison result.

6. The method of claim 5 wherein controlling the unloading operation based on the comparison result comprises:
controlling repositioning of the material conveyance subsystem (192) relative to the receiving vehicle based on the comparison result.

7. The method of claim 5 wherein controlling the unloading operation based on the comparison result comprises:
controlling (346) stoppage of the material conveyance subsystem based on the comparison result.

8. The method of claim 1 wherein detecting the weight of the material in the receiving vehicle comprises:
receiving (290) a weight signal from a scale (226) on the receiving vehicle, the weight signal being generated by the scale (226) and being indicative of the weight of the material in the receiving vehicle.

9. The method of claim 8 wherein the receiving vehicle is propelled by a following vehicle (136) and wherein receiving the weight signal comprises:
receiving (290) the weight signal from the following vehicle (136) over a wireless communication network (155).

10. The method of claim 9 wherein receiving the weight signal over a wireless communication network comprises:
receiving (290) the weight signal over one or more of a wifi network or a Bluetooth network.

11. The method of claim 1 wherein controlling the unloading operation comprises
accessing (374) volume data, indicative of a volume, corresponding to the receiving vehicle;
accessing (358) density information indicative of a density of the material;
setting (378) a desired fill level based on the volume data and the density information; and
controlling (384) the unloading operation based on the fill level of material and the desired fill level.

12. The method of claim 11 wherein accessing volume data comprises:
accessing (374) volume profile data indicative of a volume profile of the receiving vehicle along a front-to-back axis of the receiving vehicle.

13. The method of claim 1 wherein controlling the unloading operation comprises:
accessing (370) historic fill level information indicative of a prior fill level of material loaded into the receiving vehicle during a previous unloading operation corresponding to the receiving vehicle;
accessing historic weight information (314) indicative of a prior weight of material loaded into the receiving vehicle during a previous unloading operation;
setting (372) a desired fill level based on the historic level information (318) and the historic weight information (314); and
controlling (380) the unloading operation based on the fill level of material and the desired fill level.

14. An agricultural system in which a leading vehicle is configured to perform an unloading operation to unload material from the leading vehicle into a receiving vehicle, the agricultural system comprising:
a controllable subsystem (156) configured to perform an unloading operation to unload the material into the receiving vehicle; and
an unloading control system (150) configured to obtain a weight of the material in the receiving vehicle and to control the unloading operation based on the weight of the material.

15. A control system controlling unloading of material from a leading vehicle to a receiving vehicle, the control system comprising:
a fill level detector (162) configured to obtain a fill level indicator indicative of a fill level of material in the receiving vehicle; and
an unloading control system (150) configured to receive (290) an indication of a weight of the material in the receiving vehicle and to generate (298) a control signal to control a controllable subsystem (156) to perform an unloading operation based on the fill level of material and based on the weight of the material.
